# EUROPÄISCHE PATENTANMELDUNG

(11) **EP 3 923 429 A1**
(43) Veröffentlichungstag der Anmeldung: **15.12.2021**
(21) Anmeldenummer: 21177238.9
(22) Anmeldetag: 01.06.2021
(51) Int. Cl.: H02G 3/08, H02G 3/12, B29C 45/16, H02G 3/04

(54) **BRANDSCHUTZELEKTRODOSE**

(30) Priorität: 10.06.2020 DE 102020115503
(71) Anmelder: Kaiser GmbH & Co. KG, 58579 Schalksmühle (DE)
(72) Erfinder: GLÖRFELD, Maik, 58515 Lüdenscheid (DE); KASSÜHLKE, Rüdiger, 57482 Wenden (DE)
(74) Vertreter: Rentsch Partner AG

(57) **Zusammenfassung**

Die vorliegende Erfindung betrifft eine Brandschutzdose (1) für elektrotechnische Installationen. Die Brandschutzdose (1) umfasst einen Dosenkörper (2) aus einer tragenden Kunststoffkomponente mit einem Dosenboden (3) und einer röhrenförmigen Seitenwand (4). Innen auf dem Dosenkörper (2) ist mindestens ein Brandschutzbereich (7) umfassend eine intumeszierende Materialkomponente angeordnet. Mindestens eine Schicht (8) aus einer weichelastischen Kunststoffkomponente überdeckt den mindestens einen Brandschutzbereich (7) zumindest bereichsweise. Die Erfindung betrifft weiter ein Verfahren zur Herstellung einer Brandschutzdose (1) aus einer tragenden Kunststoffkomponente, einer intumeszierenden Materialkomponente sowie einer weichelastischen Kunststoffkomponente durch Spritzguss.

## Beschreibung

Die vorliegende Erfindung betrifft eine Brandschutzdose für elektrotechnische Installationen sowie ein Verfahren zu dessen Herstellung.

Bei in Hohlwänden verbauten Installationsdosen ergibt sich im Brandfall die Problematik, dass der Brand sich durch die Hohlwand, respektive durch die Installationsdose, ausbreiten kann. Die Flammen können durch eine Installationsöffnung der Installationsdose in die Hohlwand hineintreten und z.B. durch diese in einen benachbarten Raum wieder aus der Hohlwand heraustreten.

Für diesen Fall sind spezielle Brandschutzdosen bekannt, welche im Falle eines Brandes oder einer entsprechenden Hitzeeinwirkung mittels intumeszierenden Materialien eine Brandschottung erzeugen. Das intumeszierende Material quillt im Brandfall auf und verschliesst die Einbauöffnung in der Hohlwand gegen die Brandschutzdose und/oder einen Installationsraum der Brandschutzdose. Problematisch ist, dass die Intumeszenzadditive oftmals eine elektrische Leitfähigkeit besitzen, was eine Verwendung in Kombination mit den verbauten Elektroinstallationen erschwert.

Ein Beispiel einer bekannten Brandschutzdose ist die EP3312958A1**,** veröffentlicht 2018 im Namen F-Tronik Winfried Fohs GmbH. Diese offenbart eine Brandschutzdose mit einer Schicht aus Kunststoff, wobei diese Schicht Öffnungen für die Einführung von Kabeln und/oder Leerrohren aufweist. Auf der Aussenfläche der Schicht ist weiterhin ein weichelastisches Material angebracht, das zumindest diese Öffnungen überdeckt. Das weichelastische Material umfasst ferner ein intumeszierendes Material.

Die EP3280019A1**,** ebenfalls veröffentlicht 2018 im Namen der F-Tronik Winfried Fohs GmbH, offenbart zudem eine Brandschutzdose mit einer inneren Schicht aus Kunststoff sowie eine Beschichtung aus einem intumeszierenden Material, das zumindest in Teilbereichen auf der Aussenfläche der inneren Schicht angebracht ist. Auf der Aussenfläche der inneren Schicht ist weiterhin ein weichelastisches Material angebracht, das Öffnungen für die Einführung von Kabeln und/oder Leerrohren überdeckt.

Aus dem Stand der Technik sind ebenfalls Brandschutzdosen mit einem intumeszierenden Material im Innenbereich der Brandschutzdose bekannt. Die DE202014104064**,** veröffentlicht 2015 in Namen der F-Tronik GmbH, offenbart eine Brandschutzdose, mit einer Mantelfläche aus Kunststoff, welche im Inneren der Brandschutzdose einen Aufnahmeraum für intumeszierendes Material ausbildet. Der Aufnahmeraum ist durch eine Kunststoffabdeckung verschliessbar, welche verhindert, dass unter normalen Betriebsbedingungen spannungführende Teile mit dem intumeszierenden Material in Kontakt kommen.

Die EP3460930**,** veröffentlicht 2019 in Namen der F-Tronik GmbH, offenbart eine Brandschutzdose, welche eine topfförmige Dose mit einem Inneneinsatz aufweist, der zumindest teilweise aus einem intumeszierenden Material besteht. Der Inneneinsatz ist über eine Rastverbindung mit der topfförmigen Dose wirkverbunden. Der Inneneinsatz und die topfförmige Dose werden demnach separat hergestellt.

Eine Aufgabe der Erfindung besteht darin eine verbesserte Brandschutzdose bereitzustellen. Eine weitere Aufgabe der Erfindung ist es die Herstellung einer solchen Brandschutzdose zu vereinfachen.

Eine Brandschutzdose für elektrotechnische Installationen umfasst gemäss der Erfindung einen Dosenkörper aus einer tragenden Kunststoffkomponente, mindestens einen Brandschutzbereich umfassend eine intumeszierende Materialkomponente und mindestens eine Schicht aus einer weichelastischen Kunststoffkomponente (folgend auch weichelastische Schicht genannt). Der Dosenkörper umfasst hierbei einen Dosenboden, welcher in eine röhrenförmige Seitenwand übergeht, die sich in axialer Richtung erstreckt. Der Dosenkörper, respektive der Dosenboden und die Seitenwand, bilden einen Innenraum des Dosenkörpers aus. Der Innenraum kann zumindest bereichsweise den mindestens einen Brandschutzbereich und die mindestens eine (weichelastische) Schicht aufnehmen. Die Brandschutzdose umfasst weiter einen Installationsraum zur Aufnahme von den elektrotechnischen Installationen. Je nach Ausgestaltung kann der Installationsraum von der Seitenwand und dem Dosenboden mit dem darauf angeordneten mindestens einen Brandschutzbereich mit der mindestens einen Schicht gebildet werden. (D.h. der Installationsraum ist ein Teilbereich des Innenraums des Dosenkörpers.) Der Installationsraum ist über eine Installationsöffnung zugänglich. Die Installationsöffnung ist gegenüberliegend dem Dosenboden angeordnet.

Der mindestens eine Brandschutzbereich ist zumindest bereichsweise auf einer Innenseite des Dosenkörpers angeordnet. Die Innenseite ist dem Innenraum des Dosenkörpers hingewandt. Der mindestens eine Brandschutzbereich dient dazu im Brandfall aufzuquellen und die Brandausbreitung durch die Brandschutzdose in eine Hohlwand zu erschweren. Durch die Anordnung auf der Innenseite kann eine zum Installationsraum hin gerichtete Aufquellrichtung, in welche das intumeszierende Material bei Hitzeentwicklung aufquillt, erzielt werden. Die intumeszierende Materialkomponente kann Graphit, insbesondere Blähgraphit, umfassen. Alternativ kann die intumeszierende Materialkomponente Phosphate umfassen. Beispielsweise kann die intumeszierende Materialkomponente eine thermoplastische Matrix aufweisen, in welche Intumeszenzträger auf Basis von Phosphat eingebunden sind. Die Quelltemperatur, bei der das intumeszierende Material aufquillt, liegt in der Regel (je nach verwendeten Material, bzw. Materialzusammensetzung) zwischen 160° - 300° Celsius. Für die vorliegende Anwendung kann die Quelltemperatur der intumeszierenden Materialkomponente zwischen 200 - 300° Celsius, insbesondere zwischen 200° - 250° Celsius, liegen.

Die tragende Kunststoffkomponente des Dosenkörpers dient dem mindestens einen auf diesem angeordneten Brandschutzbereich beim Aufquellen als Abstützung. Für ein Abstützen der intumeszierenden Materialkomponente beim Aufquellen ist es daher sinnvoll, wenn die tragende Kunststoffkomponente bei der Quelltemperatur der intumeszierende Materialkomponente möglichst ihre Form beibehält und nicht z.B. aufweicht oder schmilzt. Die tragende Materialkomponente ist also mit Vorteil ein sogenannter Hochtemperaturkunststoff. Dies kann ein Duroplast oder ein Thermoplast sein. Beispielsweise kann die tragende Materialkomponente Polypropylen (PP), Polycarbonat (PC), Polyethylen (PE), Polyamid (PA), Polyphenylensulfid (PPS) oder Polytetrafluorethylen (PTFE) sein.

Für ein gleichmässiges Quellen in den Installationsraum kann es vorteilhaft sein, dass der mindestens eine Brandschutzbereich auf dem Dosenboden und/oder der Seitenwand angeordnet ist. Je nach Anwendung können auf der Seitenwand mehrere Brandschutzbereiche angeordnet sein. Mit Vorteil sind diese um einen Umfang der Seitenwand verteilt angeordnet. Beispielsweise können die mehreren Brandschutzbereiche jeweils zwischen zwei Befestigungsmitteln angeordnet sein. Die Befestigungsmittel können sich jeweils in axialer Richtung an der Innenseite der Seitenwand entlang erstrecken. Die Befestigungsmittel können jeweils eine Befestigungsöffnung umfassen. Die Befestigungsöffnung kann von einem Dom umgeben sein. Die Befestigungsöffnungen dienen zur Aufnahme von Befestigungselementen, wie z.B. Nägel oder Schrauben, zur Befestigung der Elektroinstallationen an der Brandschutzdose. Die Befestigungsmittel, wenn vorhanden, sind Teil des Dosenkörpers. Die Befestigungsmittel können die tragende Kunststoffkomponente umfassen. Alternativ sind jedoch auch Varianten denkbar bei denen mindestens ein ringförmiger Brandschutzbereich entlang der Seitenwand angebracht ist. Alternativ oder ergänzend kann mindestens ein Brandschutzbereich entlang der Aussenseite des Dosenkörpers angeordnet sein.

Die mindestens eine Schicht aus einer weichelastischen Kunststoffkomponente kann den Brandschutzbereich zumindest bereichsweise überdecken. Im Fall einer Anordnung des mindestens eines Brandschutzbereichs auf der Innenseite des Dosenkörpers überdeckt die weichelastische Schicht somit (zumindest teilweise) den mindestens eines Brandschutzbereichs zum Installationsraum hin. Mit Vorteil ist jedoch der mindestens eine Brandschutzbereich vollständig mit einer Schicht aus der weichelastischen Kunststoffkomponente bedeckt. Die weichelastische Kunststoffkomponente behindert insbesondere nicht oder nur wenig die Aufquellung der intumeszierenden Materialkomponente. Des Weiteren kann die weichelastische Kunststoffkomponente elektrisch isolierend sein. Auf diese Weise kann während der normalen Anwendung (nicht im Brandfall) eine elektrische Kontaktierung der in dem Installationsraum installierten Elektroinstallationen mit der elektrisch leitenden intumeszierenden Materialkomponente vermieden werden. Dies ist besonders wichtig bei einer Anordnung des mindestens einen Brandschutzbereichs auf der Innenseite des Dosenkörpers, denn in diesem Fall liegt die auf dem mindestens einen Brandschutzbereich angeordnete Schicht nach innen, d.h. zum Installationsraum und zu den darin angeordneten elektrotechnischen Installationen hingewandt. Die weichelastische Kunststoffkomponente kann beispielsweise ein thermoplastisches Elastomer (TPE), ein weichelastisches Polypropylen (PP), ein weichelastisches Polyethylen (PE) oder ein Silikon sein. Mit Vorteil ist die tragende Materialkomponente ein hartes Polypropylen (PP) und die weichelastische Kunststoffkomponente ein weichelastisches Polypropylen (PP). Alternativ kann ebenfalls für die die tragende Materialkomponente ein hartes Polypropylen (PP) und für die weichelastische Kunststoffkomponente ein weichelastisches Polyethylen (PE) verwendet werden. Alternativ kann die tragende Materialkomponente aus harten Polypropylen (PP) mit einer thermoplastischen, weichelastischen Kunststoffkomponente kombiniert werden.

Je nach Anwendung können weitere Komponenten der Brandschutzdose die weichelastische Kunststoffkomponente umfassen oder aus dieser bestehen. Beispielsweise kann der Dosenkörper mindestens eine Einführöffnung zum Einführen von Installationsleitungen in den Installationsraum umfassen, welche (in einem initialen Zustand vor der Montage) von einer Membran aus der weichelastischen Kunststoffkomponente abdeckt ist. Die Einführöffnung kann an der Seitenwand und/oder an dem Dosenboden angeordnet sein. Die Membran erstreckt sich über die Einführöffnung und kann an den Rändern der Einführöffnung angeformt sein. Zum Einführen von Installationsleitungen (bei der Montage) kann die Membran durchstochen oder zumindest bereichsweise geöffnet werden. Auf der Membran können Greiflaschen angeordnet sein, welche z.B. das bereichsweise Entfernen der Membran erleichtern können. Weiterhin sind Dünnstellen um den entfernbaren Bereich der Membran denkbar.

Alternativ oder in Ergänzung kann die Brandschutzdose entlang der Aussenseite der Seitenwand mindestens einen sich in die axiale Richtung erstreckenden Steg aus der weichelastischen Kunststoffkomponente umfassen. Dieser kann insbesondere zur Schallentkopplung zwischen der Brandschutzdose und einer Hohlwand dienen. Mit Vorteil steht der Steg hierzu in radialer Richtung der Brandschutzdose über die Seitenwand des Dosenkörpers hinaus. In einer möglichen Variante umfasst die Brandschutzdose mehrere um den Umfang des Dosenkörpers verteilt angeordnete Stege.

Mit Vorteil ist die Brandschutzdose integral hergestellt. Der Brandschutzbereich und/oder die weichelastische Kunststoffkomponente (insbesondere die mindestens eine Schicht und/oder die mindestens eine Membran und/oder der mindestens eine Steg) können an dem Dosenkörper angeformt sein.

In einer möglichen Ausführungsvariante kann die Brandschutzdose zumindest teilweise in einem Spritzgussverfahren hergestellt werden. Hierzu können die tragende Kunststoffkomponente und/oder die intumeszierende Materialkomponente und/oder die weichelastische Kunststoffkomponente (folgend zusammenfassend auch als Materialkomponenten bezeichnet) Spritzgusskomponenten sein. Mit Vorteil ist die Brandschutzdose ein Drei-Komponenten-Spritzgussbauteil, respektive wird diese in einem Drei-Komponenten-Spritzgussverfahren hergestellt.

In einem Spritzgussverfahren liegt in der Regel pro Materialkomponente mindestens ein Anspritzpunkt vor, über welchen die flüssige Materialkomponente in die Kavität gelangt. Ein an einer Aussenseite angeordneter Anspritzpunkt ist in der Regel am gefertigten Bauteil sichtbar in Form eines kleinen Punktes, wie z.B. einer lokalen Vertiefung oder Erhebung. Mindestens je ein Anspritzpunkt der tragenden Kunststoffkomponente und/oder der intumeszierenden Materialkomponente und/oder der weichelastischen Kunststoffkomponente kann in Bereich des Dosenbodens und/oder der Seitenwand angeordnet sein. Im Bereich des Dosenbodens ist hierbei zu verstehen als in axialer Richtung innerhalb einer Kontur des Dosenbodens. Die jeweiligen Anspritzpunkte der tragenden Kunststoffkomponente und/oder der intumeszierenden Materialkomponente und/oder der weichelastischen Kunststoffkomponente sind mit Vorteil zum Installationsraum hingewandt angeordnet. Der (mindestens eine) Anspritzpunkt der tragenden Kunststoffkomponente kann von der intumeszierenden Materialkomponente und/oder der weichelastischen Kunststoffkomponente verdeckt sein. Der (mindestens eine) Anspritzpunkt der intumeszierenden Materialkomponente kann wiederum von der weichelastischen Kunststoffkomponente verdeckt sein. Mit Vorteil ist der (mindestens eine) Anspritzpunkt der weichelastischen Kunststoffkomponente in axialer Richtung neben dem mindestens einen Brandschutzbereich angeordnet.

Pro Materialkomponente kann lediglich ein Anspritzpunkt, insbesondere im Bereich des Dosenbodens, vorgesehen sein. In diesem Fall sind diejeweiligen Bereiche der Brandschutzdose aus der entsprechenden Materialkomponente über Materialbrücken miteinander verbunden. Die Materialbrücken dienen zum Fliessen der jeweiligen Materialkomponente beim Spritzgussprozess von einem Bereich in den anderen. Beispielsweise können die Stege über Materialbrücken aus der weichelastischen Materialkomponente mit der Membran und/oder der weichelastischen Schicht auf dem mindestens einen Brandschutzbereich verbunden sein. Weiterhin können mehrere Brandschutzbereiche über Materialbrücken aus der intumeszierenden Materialkomponente verbunden sein.

Die Erfindung betrifft weiterhin ein Verfahren zur Herstellung einer Brandschutzdose für elektrotechnische Zwecke. Mit diesem Verfahren kann eine Brandschutzdose wie oben beschrieben hergestellt werden. Jedoch können auch andere Ausgestaltungen solcher Brandschutzdosen mit diesem Verfahren hergestellt werden. Das Verfahren umfasst die folgenden Verfahrensschritte: Bilden mindestens einer ersten Kavität und Spritzen einer (nach dem Aushärten tragenden) Kunststoffkomponente in mindestens eine erste Kavität zur Ausbildung eines Dosenkörpers der Brandschutzdose. Bilden mindestens einer zweiten Kavität (in welcher der Dosenkörper angeordnet ist) und Anspritzen mindestens eines Brandschutzbereichs aus einer intumeszierenden Materialkomponente an den Dosenkörper in die mindestens eine zweite Kavität. Unter Anspritzen wird hierbei ein Spritzen einer Materialkomponente in die entsprechende Kavität verstanden, wobei die gespritzte Materialkomponente an den in der Kavität vorhandenen zuvor geformten (Dosen-) Körper angeformt wird, sodass ein integrales Bauteil entsteht. Bilden mindestens einer dritten Kavität. In der dritten Kavität ist hierbei der Dosenkörper mit dem mindestens einen bereits angespritzten Brandschutzbereich angeordnet. Anspritzen mindestens einer Schicht aus einer weichelastischen Kunststoffkomponente an den Dosenkörper und/oder den mindestens einen Brandschutzbereich in die dritte Kavität, sodass die mindestens eine Schicht zumindest bereichsweise auf dem mindestens einen Brandschutzbereich angeordnet ist. In diesem Verfahrensschritt können ergänzend weitere Elemente aus der weichelastischen Kunststoffkomponente angespritzt werden. Z.B. kann mindestens eine Membran und/oder mindestens ein Steg, wie oben beschrieben, angeformt werden. Mit Vorteil kann zur Ausführung des Verfahrens eine Spritzgiessvorrichtung bereitgestellt werden, welche eine erste, zweite, dritte und vierte Formhälfte umfasst. Die erste Formhälfte kann alternierend mit der zweiten, dritten und vierten Formhälfte zusammenwirken. Bei diesem Aufbau kann das Verfahren die folgenden Verfahrensschritte umfassen: Bilden mindestens einer ersten Kavität zwischen der ersten Formhälfte und der zweiten Formhälfte und Spritzen einer ersten Komponente in die mindestens eine erste Kavität zur Ausbildung eines Dosenkörpers der Brandschutzdose. Trennen der ersten und der zweiten Formhälfte, wobei der Dosenkörper an der ersten Formhälfte verbleibt. Bilden mindestens einer zweiten Kavität zwischen der ersten und der dritten Formhälfte und Anspritzen mindestens eines Brandschutzbereiches aus einer intumeszierende Materialkomponente an den (in der zweiten Kavität angeordneten) Dosenkörper in die mindestens eine zweite Kavität. Trennen der ersten und der dritten Formhälfte, wobei der Dosenkörper und der mindestens eine angeformte Brandschutzbereich an der ersten Formhälfte verbleibt. Bilden mindestens einer dritten Kavität zwischen der ersten Formhälfte und der vierten Formhälfte und Anspritzen von mindestens einer Schicht aus der weichelastischen Kunststoffkomponente an den Dosenkörper und/oder den mindestens einen Brandschutzbereich (welche in der dritten Kavität angeordnet sind) in die mindestens eine dritte Kavität, sodass die Schicht zumindest bereichsweise auf dem mindestens einen Brandschutzbereich angeordnet ist. Nach dem Trennen der ersten und der vierten Formhälfte kann der Dosenkörper mit dem Brandschutzbereich und der Schicht an der vierten Formhälfte verbleiben. Anschliessend kann die fertige Brandschutzdose ausgeworfen oder entnommen werden.

Für einen effizienten Herstellungsprozess ist es vorteilhaft, wenn die erste Formhälfte an einem um eine Rotationsachse drehbaren Mittelteil angeordnet ist. Die zweite, dritte und vierte Formhälfte können verschiebbar um den Mittelteil herum angeordnet sein. Mit Vorteil sind die zweite, dritte und vierte Formhälfteje um 120° zueinander um den Mittelteil versetzt angeordnet. Die jeweiligen Formhälften können jeweils mehrere Kavitäten ausbilden, sodass pro Verfahrenszyklus mehrere Brandschutzdosen zeitgleich hergestellt werden können.

Wie oben beschrieben, kann die tragende Kunststoffkomponente über mindestens einen Anspritzpunkt am Dosenboden gespitzt werden. Auch die intumeszierende Materialkomponente und/oder die weichelastische Materialkomponente kann über je mindestens einen Anspritzpunkt im Bereich des Dosenbodens angespritzt werden. Hierzu kann die zweite, dritte und die vierte Formhälfte je einen Kern umfassen, durch welchen sich die Düse zum Anspritzen der jeweiligen Materialkomponente erstreckt. Die jeweiligen Anspritzpunkte der Materialkomponenten sind dann zu dem Installationsraum der Brandschutzdose hingewandt angeordnet.

Je nach Material und Spritztemperatur können alle drei Anspritzpunkte der jeweiligen Materialkomponenten in axialer Richtung hintereinander angeordnet sein. Wie beschrieben können die jeweiligen Bereiche einer Materialkomponente über Materialbrücken miteinander verbunden sein, sodass nur ein Anspritzpunkt pro Materialkomponente vorhanden ist. Mit Vorteil sind die Anspritzpunkte der intumeszierenden Materialkomponente und der weichelastischen Kunststoffkomponente jedoch aus axialer Richtung betrachtet an unterschiedlichen Positionen angeordnet. Insbesondere ist es vorteilhaft, wenn in eine Anspritzrichtung (normal zur Fläche auf welchem der Anspritzpunkt angeordnet ist) und vom Anspritzpunkt der weichelastischen Kunststoffkomponente ausgehend kein Brandschutzbereich, respektive keine intumeszierenden Materialkomponente, angeordnet ist. Dies ist vorteilhaft, da die Temperatur der angespritzten Materialkomponenten am Anspritzpunkt am höchsten ist und ggf. eine darunterliegende temperatursensitive intumeszierende Materialkomponente beeinflussen, wie z.B. lokal aufquellen, könnte. Die Temperatur der weichelastischen Komponente beim Spritzen liegt mit Vorteil unterhalb der Quelltemperatur der intumeszierenden Komponente. Die Temperatur der weichelastischen Komponente beim Spritzen kann (je nach Quelltemperatur der intumeszierenden Komponente) zwischen 180° - 280° Celsius liegen, insbesondere zwischen 180° - 200° Celsius (unter der Voraussetzung, dass der Grenzwert von 200° Celsius nur für eine der beiden Temperaturen, Quelltemperatur der intumeszierenden Komponente oder Spitztemperatur der weichelastischen Komponente, ausgewählt sein kann). Bei der Anordnung des (mindestens einen) Anspritzpunktes der weichelastischen Kunststoffkomponente neben einem Brandschutzbereich kann die weichelastische Materialkomponente von ihrem Anspritzpunkt auf den Brandschutzbereich fliessen um diesen zumindest bereichsweise abzudecken. Während des Fliessens und vor dem Kontakt mit der intumeszierenden Komponente kann die weichelastischen Komponente hierbei zunächst abkühlen. Um das Fliessen der weichelastischen Materialkomponente auf den mindestens einen Brandschutzbereich zu erleichtern, kann auf dem Dosenkörper und/oder dem mindestens einen Brandschutzbereich mindestens ein Fliesskanal ausgebildet sein. Dieser kann entlang einer Oberfläche des Dosenkörpers und/oder dem mindestens einen Brandschutzbereich verlaufen. Je nach Anordnung kann der mindestens eine Fliesskanal sich alternativ oder ergänzend ebenfalls zumindest abschnittsweise durch den Dosenkörper und/oder den mindestens einen Brandschutzbereich erstecken. In diesem Fall kann sich der Fliesskanal von dem Installationsraum bis zur Dosenaussenseite erstrecken.

Die zuvor beschriebenen Ausführungsformen des Verfahrens offenbaren zugleich entsprechend ausgestaltete Ausführungen durch das Verfahren hergestellter Brandschutzdosen und umgekehrt.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine Variante einer erfindungsgemässen Brandschutzdose in einer perspektivischen Ansicht von oben;
- Fig. 2: Die Variante der Brandschutzdose gemäss Figur 1 in einer perspektivischen Ansicht von unten;
- Fig. 3: Die Variante der Brandschutzdose gemäss Figur 1 in einer Ansicht von oben;
- Fig. 4: Die Variante der Brandschutzdose in einer geschnittenen Ansicht gemäss Figur 3.

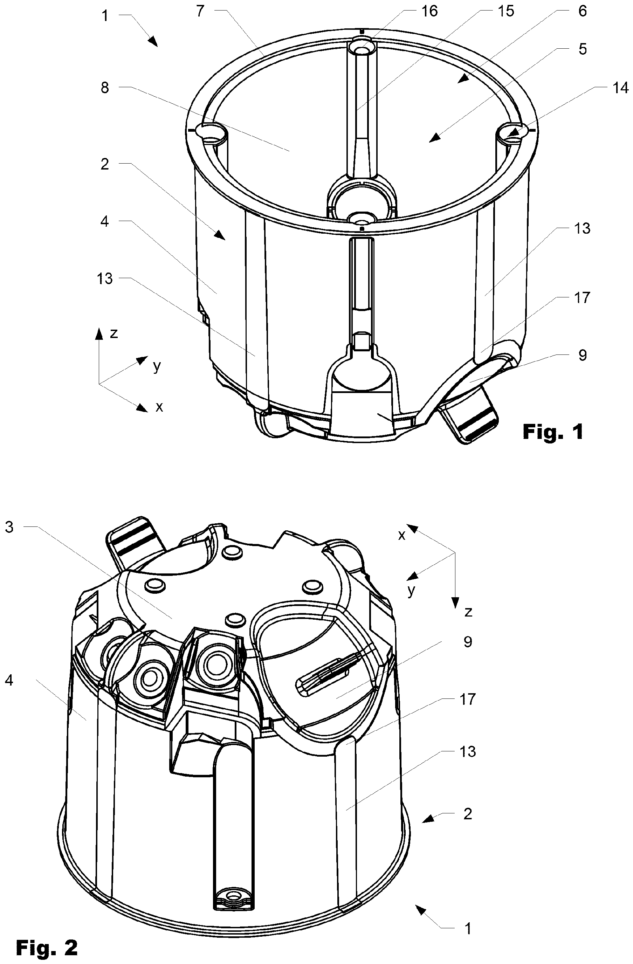

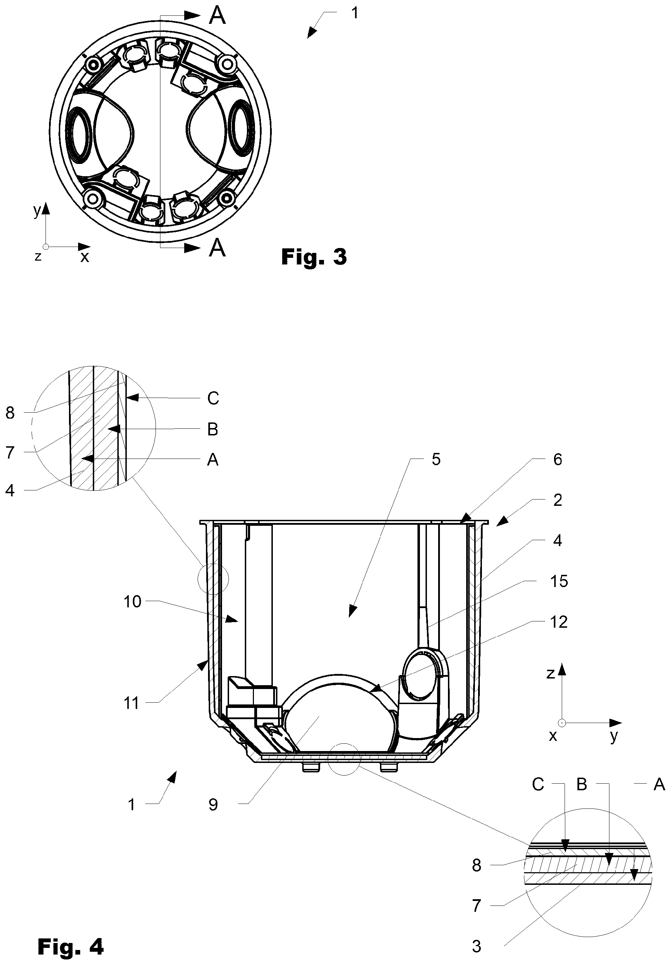

**Figur 1** bis **Figur 4** zeigen eine Variante einer erfindungsgemässen Brandschutzdose 1 für elektrotechnische Installationen. Die Brandschutzdose 1 umfasst einen Dosenkörper 2 aus einer tragenden Kunststoffkomponente A mit einem Dosenboden 3. Der Dosenboden 3 geht in eine röhrenförmige Seitenwand 4 des Dosenkörpers 2 über, die sich in axialer Richtung (z-Richtung) erstreckt. Die Brandschutzdose 1 bildet einen inneren Installationsraum 5 zur Aufnahme der elektrotechnischen Installationen aus. Dem Dosenboden 3 gegenüberliegend ist eine Installationsöffnung 6 angeordnet. Auf dem Dosenkörper 2, insbesondere auf dem Dosenboden 3 und der Seitenwand 4, sind Brandschutzbereiche 7 angeordnet. Im gezeigten Fall sind auf der Innenseite 10 der Seitenwand 4 insgesamt vier Brandschutzbereiche 7 angeordnet. Ergänzend ist ein weiterer Brandschutzbereich 7 auf dem Dosenboden 3 angeordnet. Die Brandschutzbereiche 7 umfassen eine intumeszierende Materialkomponente B, insbesondere Blähgraphit. Die Brandschutzbereiche können über Materialbrücken (nicht sichtbar) aus der intumeszierende Materialkomponente B miteinander verbunden sein. Im gezeigten Fall ist der Brandschutzbereich 7 auf dem Dosenboden 3 über jeweils eine Materialbrücke mit den jeweiligen Brandschutzbereichen 7 angeordnet auf der Seitenwand 4 verbunden. Im gezeigten Fall sind die vier Brandschutzbereiche 7 auf der Seitenwand 4 des Dosenkörpers 2 je zwischen zwei Befestigungsmitteln 14 angeordnet. Die Befestigungsmittel 14 umfassen jeweils eine Befestigungsöffnung 16 mit einem diesen umgebenden Dom 15. Die Befestigungsmittel 14 erstrecken sich in axialer Richtung entlang der Innenseite 10 der Seitenwand 4. Die Befestigungsöffnungen 16 dienen zur Aufnahme von Befestigungselementen, wie z.B. Nägel oder Schrauben.

Auf den Brandschutzbereichen 7 ist jeweils eine Schicht 8 aus einer weichelastischen Kunststoffkomponente C angeordnet, welche den jeweiligen Brandschutzbereich 7 zum Installationsraum 5 hin vollständig überdeckt. Jedoch sind auch Varianten denkbar, wo nur Teile der jeweiligen Brandschutzbereiche 7 überdeckt sind. Die Schicht 8 aus der weichelastischen Kunststoffkomponente C isoliert den Installationsraum elektrisch zu der intumeszierenden Komponente B der Brandschutzbereiche 7. Die weichelastische Kunststoffkomponente C kann weiterhin benutzt werden um Einführöffnungen 12 des Dosenkörpers 2 zum Einführungen von Installationsleitungen in den Installationsraum 5 (zumindest vorübergehend) abzudecken. Im gezeigten Fall werden die Einführöffnungen 12 von je einer Membran 9 aus der weichelastischen Kunststoffkomponente C überspannt. Weiterhin sind an der Aussenseite 11 der Brandschutzdose 1 mehrere Stege 13 angeordnet. Die Stege 13 erstrecken sich entlang der Aussenseite 11 des Dosenkörpers 2 in die axiale Richtung und bestehen aus der weichelastischen Kunststoffkomponente C. Die Stege 13 stehen in die radiale Richtung über den Dosenkörper 2 hinaus und können so im montierten Zustand der Brandschutzdose 1 in einer Hohlwand (nicht gezeigt) zu dieser eine Schallentkopplung bereitstellen. Die Stege 13 schliessen mit Vorteil je über mindestens eine Materialbrücke 17 aus der weichelastischen Kunststoffkomponente an eine Membran 9 an.

Die dargestellte Brandschutzdose kann über ein Verfahren, wie oben beschrieben hergestellt werden. Insbesondere kann die dargestellte Brandschutzdose über alle erläuterten optionalen Verfahrensschritte hergestellt werden.

**LISTE DER BEZUGSZEICHEN**

| | | | |
|---|---|---|---|
| 1 | Brandschutzdose | 10 | Innenseite |
| 2 | Dosenkörper | 11 | Aussenseite |
| 3 | Dosenboden | 12 | Einführöffnung |
| 4 | Seitenwand | 13 | Steg |
| 5 | Installationsraum | 14 | Befestigungsmittel |
| 6 | Installationsöffnung | 15 | Dom |
| 7 | Brandschutzbereich | 16 | Befestigungsöffnung |
| 8 | Schicht | 17 | Materialbrücke |
| 9 | Membran | | |

## Patentansprüche

1. Brandschutzdose (1) für elektrotechnische Installationen mit
a. einem Dosenkörper (2) aus einer tragenden Kunststoffkomponente (A) mit
i. einem Dosenboden (3), welcher in eine röhrenförmige Seitenwand (4) übergeht, die sich in axialer Richtung (z) erstreckt; und
ii. eine Installationsöffnung (6), welche dem Dosenboden (3) gegenüberliegend angeordnet ist;
b. mindestens einem Brandschutzbereich (7), umfassend eine intumeszierende Materialkomponente (B), welcher zumindest bereichsweise auf einer Innenseite (10) des Dosenkörpers (2) angeordnet ist; und
c. mindestens eine Schicht (8) aus einer weichelastischen Kunststoffkomponente (C), welche den mindestens einen Brandschutzbereich (7) zumindest bereichsweise in Richtung eines Installationsraumes (5) der Brandschutzdose (1) hin überdeckt.

2. Brandschutzdose (1) gemäss Patentanspruch 1, **dadurch gekennzeichnet, dass** der mindestens eine Brandschutzbereich (7) auf dem Dosenboden (3) und/oder der Seitenwand (4) angeordnet ist.

3. Brandschutzdose (1) gemäss einem der vorangehenden Patentansprüche, **dadurch gekennzeichnet, dass** mehrere um einen Umfang der Seitenwand (4) verteilt angeordnete Brandschutzbereiche (7) auf der Innenseite (10) an der Seitenwand (4) angeordnet sind.

4. Brandschutzdose (1) gemäss Patentanspruch 3, **dadurch gekennzeichnet, dass** die mehreren Brandschutzbereiche (7) je zwischen zwei Befestigungsmitteln (14) angeordnet sind, welche sich je in axialer Richtung an der Innenseite (10) an der Seitenwand (4) erstrecken.

5. Brandschutzdose (1) gemäss einem der vorangehenden Patentansprüche, **dadurch gekennzeichnet, dass** die intumeszierende Materialkomponente (B) Graphit, insbesondere Blähgraphit, umfasst.

6. Brandschutzdose (1) gemäss einem der vorangehenden Patentansprüche, **dadurch gekennzeichnet, dass** der Dosenkörper (2) mindestens eine Einführöffnung (12) zum Einführen von Installationsleitungen in den Installationsraum (5) umfasst, welche von einer Membran (9) aus der weichelastischen Kunststoffkomponente (C) abgedeckt ist.

7. Brandschutzdose (1) gemäss einem der vorangehenden Patentansprüche, **dadurch gekennzeichnet, dass** die Brandschutzdose (1) entlang der Aussenseite (11) des Dosenkörpers (2) mindestens einen sich in die axiale Richtung erstreckenden Steg (13) aus der weichelastischen Kunststoffkomponente (C) umfasst.

8. Brandschutzdose (1) gemäss einem der vorangehenden Patentansprüche, **dadurch gekennzeichnet, dass** der mindestens eine Brandschutzbereich (7) und die weichelastische Kunststoffkomponente (C) integral an dem Dosenkörper (2) angeformt sind.

9. Brandschutzdose (1) gemäss einem der vorangehenden Patentansprüche, **dadurch gekennzeichnet, dass** die tragende Kunststoffkomponente (A) und/oder die intumeszierende Materialkomponente (B) und/oder die weichelastische Kunststoffkomponente (C) Spritzgusskomponenten sind.

10. Brandschutzdose (1) gemäss einem der vorangehenden Patentansprüche, **dadurch gekennzeichnet, dass** ein Anspritzpunkt der tragenden Kunststoffkomponente (A) und/oder der intumeszierenden Materialkomponente (B) und/oder der weichelastischen Kunststoffkomponente (C) in Bereich des Dosenbodens angeordnet ist.

11. Brandschutzdose (1) gemäss einem Patentanspruch 10, **dadurch gekennzeichnet, dass** der Anspritzpunkt der tragenden Kunststoffkomponente (A) und/oder der intumeszierenden Materialkomponente (B) und/oder der weichelastischen Kunststoffkomponente (C) zum Installationsraum (5) hingewandt angeordnet ist.

12. Brandschutzdose (1)gemäss einem Patentanspruch 10 oder 11, **dadurch gekennzeichnet, dass** der Anspritzpunkt der weichelastischen Kunststoffkomponente (C) in axialer Richtung neben dem mindestens einen Brandschutzbereich (7) angeordnet ist.

13. Verfahren zur Herstellung einer Brandschutzdose (1) für elektrotechnische Zwecke umfassend die folgenden Schritte:
a. Bilden mindestens einer ersten Kavität und Spritzen einer Kunststoffkomponente (A) in die mindestens eine erste Kavität zur Ausbildung eines Dosenkörpers (2) der Brandschutzdose (1);
b. Bilden mindestens einer zweiten Kavität und Anspritzen mindestens eines Brandschutzbereiches (7) aus einer intumeszierenden Materialkomponente (B) an den Dosenkörper (2) in die mindestens eine zweite Kavität;
c. Bilden mindestens einer dritten Kavität und Anspritzen mindestens einer Schicht (8) aus einer weichelastischen Kunststoffkomponente (C) an den Dosenkörper (2) und/oder an den mindestens einen Brandschutzbereich (7) in die dritte Kavität, sodass die mindestens eine Schicht (8) zumindest bereichsweise auf dem mindestens einen Brandschutzbereich (7) angeordnet ist.

14. Verfahren zur Herstellung einer Brandschutzdose (1) gemäss Patentanspruch 13, **dadurch gekennzeichnet, dass** die mindestens eine erste Kavität zwischen einer ersten Formhälfte und einer zweiten Formhälfte gebildet wird, die mindestens eine zweite Kavität zwischen der ersten Formhälfte und einer dritten Formhälfte gebildet wird, und die mindestens eine dritte Kavität zwischen der ersten Formhälfte und einer vierten Formhälfte gebildet wird, wobei die jeweiligen Formhälften zu derselben Spritzgussmaschine gehören.

15. Verfahren zur Herstellung einer Brandschutzdose (1) gemäss Patentanspruch 14, **dadurch gekennzeichnet, dass** die erste Formhälfte alternierend mit der zweiten, dritten und vierten Formhälfte zusammenwirkt.

16. Verfahren zur Herstellung einer Brandschutzdose (1) gemäss Patentanspruch 15, **dadurch gekennzeichnet, dass** die erste Formhälfte an einem drehbaren Mittelteil angeordnet ist.

17. Verfahren zur Herstellung einer Brandschutzdose (1) gemäss einem der vorangehenden Patentansprüche 14 bis 16, **dadurch gekennzeichnet, dass** nach dem Trennen der ersten und der zweiten Formhälfte der Dosenkörper (2) an der ersten Formhälfte verbleibt und nach dem Trennen der ersten und der dritten Formhälfte der Dosenkörper (2) und mit dem Brandschutzbereich (7) an der ersten Formhälfte verbleibt.

18. Verfahren zur Herstellung einer Brandschutzdose (1) gemäss einem der vorangehenden Patentansprüche 14 bis 17, **dadurch gekennzeichnet, dass** nach dem Trennen der ersten und der vierten Formhälfte der Dosenkörper (2) mit dem Brandschutzbereich (7) und der Schicht (8) an der vierten Formhälfte verbleibt.

19. Verfahren zur Herstellung einer Brandschutzdose (1) gemäss einem der vorangehenden Patentansprüche 14 bis 18, **dadurch gekennzeichnet, dass** die zweite, dritte und die vierte Formhälfte je einen Kern umfasst, durch welchen sich die entsprechende Düse zum Spritzen der Kunststoffkomponente (A) oder intumeszierenden Materialkomponente (B) oder der weichelastischen Kunststoffkomponente (C) erstreckt.

20. Verfahren zur Herstellung einer Brandschutzdose (1) gemäss einem der vorangehenden Patentansprüche 13 bis 19, **dadurch gekennzeichnet, dass** ein jeweiliger Anspritzpunkt der Kunststoffkomponente (A) und/oder intumeszierenden Materialkomponente (B) und/oder der weichelastischen Kunststoffkomponente (C) im Bereich des Dosenbodens (3) angeordnet ist.

21. Verfahren zur Herstellung einer Brandschutzdose (1) gemäss Patentanspruch 20, **dadurch gekennzeichnet, dass** der Anspritzpunkt der weichelastischen Kunststoffkomponente (C) in axialer Richtung neben dem mindestens einen Brandschutzbereich (7) angeordnet ist.

22. Verfahren zur Herstellung einer Brandschutzdose (1) gemäss Patentanspruch 20 oder 21, **dadurch gekennzeichnet, dass** die weichelastische Kunststoffkomponente (C) von ihrem Anspritzpunkt auf dem Dosenkörper (2) auf Brandschutzbereich (7) fliesst um diesen zumindest bereichsweise abzudecken.

23. Verfahren zur Herstellung einer Brandschutzdose (1) gemäss einem der vorangehenden Patentansprüche 20 bis 22, **dadurch gekennzeichnet, dass** die jeweiligen Anspritzpunkte zu einem Installationsraum (5) der Brandschutzdose (1) hingewandt angeordnet ist.
